# EUROPEAN PATENT SPECIFICATION

(11) **EP 1 604 513 B1**
(45) Date of publication and mention of the grant of the patent: **27.07.2011**
(21) Application number: 04721894.6
(22) Date of filing: 19.03.2004
(51) Int. Cl.: H04M 3/53, H04M 3/533, H04M 3/537

(54) **A SYSTEM AND METHOD FOR STORING AND ACCESSING MULTIMEDIA MESSAGES**
SYSTEM UND VERFAHREN ZUR SPEICHERUNG VON UND ZUM ZUGRIFF AUF MULTIMEDIA-NACHRICHTEN
SYSTEME ET PROCEDE DE STOCKAGE ET D'ACCESSION A DES MESSAGES MULTIMEDIA

(30) Priority: 19.03.2003 US 455813 P
(43) Date of publication of application: 14.12.2005
(73) Proprietor: Telefonaktiebolaget L M Ericsson (publ), 164 83 Stockholm (SE)
(72) Inventor: TAORI, Rakesh, NL-5628 AZ Eindhofen (NL); DEN HARTOG, Jos, NL-2904 SE Capelle a/d Ijssel (NL); DE TORBAL, René, NL-5644 GE Eindhoven (NL)
(74) Representative: Dohmen, Johannes Maria Gerardus
(86) International application number: PCT/EP2004/002985
(87) International publication number: WO 2004/084530

(56) References cited:
- EP-A- 0 782 314
- EP-A- 1 075 119
- WO-A-96/19068
- US-A1- 2002 101 964

## Description

### Technical Field of the Invention

The present invention generally relates to data and telephone communications and, in particular, to a multimedia messaging system, terminal, network node arrangement and method in a communications environment, such as the Internet, Intranet, a Public Switched Telephone Network (PSTN), an Integrated Services Digital 1 network (ISDN), a Public Land Mobile Network (PLM), or any other communications network (all types of network are hereinafter referred to as Network) that enables message transfer between a sender and at least one intended receiver of a message.

### Description of Background Art

Voice mail is one of the most widely used telecommunications services. In a typical telecommunications network, such as the PSTN, switching functions are performed in an exchange that provides connections between particular subscribers and other parts of the telecommunications network. One of the features that are typically offered to such subscribers is personalized voice mail. Thus, instead of relying upon a home answering machine, a subscriber to the telecommunications network may subscribe to a voice mail service that is provided at a public exchange of the telecommunications network.

Usually, a call placed to an intended receiver's telephone that has a voice mail service will ring a number of times. If there is no answer within a specified number of rings, the public exchange will divert or forward the call to a voice mailbox in the voice mail system that is associated with the intended receiver's telephone. The caller then hears a greeting and is prompted to leave a message. If a message is received, the intended receiver's telephone or voice mailbox is updated to provide an indication that a voice mail message has been left.

When a message is to be retrieved, the intended receiver connects with the voice mail system over a conventional 1 telephone line via a telephone call, and plays the message back by using the keypad touch buttons of the telephone terminal producing signaling tones such as Dual Tone Multi Frequency (DTMF) tones to control the playback of the voice mail message, as well as other functions. In these systems access by the addressed subscriber is typically only through a telephone line connection, either fixed or mobile.

An alternative system wherein access to the messages is provided through other means like the Internet by using a browser, is described in US patent 6,233,318.

Systems like the ones described above are built on the concept of an intended receiver having access to his own voice mail inbox (hereinafter called inbox) in which a sender of a message (hereinafter generally called sender) may leave one or more messages, such as voice mail messages, short messages, email messages and video mail (hereinafter generally called message or messages) or to which a sender may send a message.

These currently used inbox concepts have inherent problems, which all are based on the disadvantage that on the one hand, the sender has no control over messages, and on the other hand, the intended receiver has limited access possibilities to messages. For example, the intended receiver may only retrieve and delete messages.

More specifically, from the perspective of the sender, disadvantages are encountered with the inbox of the intended receiver. First of all, the inbox has storage limitations. This may lead to disadvantages like limited storage space for messages and even denial of service to the sender. Apart from the situation where an answering machine is installed at the intended receiver's home, the inbox systems are integrated in the operator's Network. Therefore, it is not possible (either for sender or the intended receiver) to control these limits. Previous senders may, for example, already have filled the intended receiver's inbox. If an inbox is full, subsequent messages, also those which may be regarded as important, are impossible to be added to the inbox.

A further disadvantage is identified when taking into account the way in which messages are recorded and the way they are controlled after recording. In a typical example, sender may want to leave a message after his call is being rerouted to the inbox of an intended receiver. In the prior art, sender simply leaves a message without means for verification and authorization, and without the possibility to add data which provide information about importance, urgency, classification etc. to a message. Again, the lack of control shows disadvantages from the perspective of the sender. It may occur, for example, that after sender has left a message, the message has become obsolete, for example because the sender and the intended receiver have already made contact through an alternative way. The sender is not able to delete the obsolete message from the inbox of the intended receiver and the intended receiver is only aware that the message is obsolete after already having listened to (parts of) the message. The same lack of control prevents a sender who has second thoughts about leaving a message after already having left a message, to withdraw the message.

Also disadvantages of conventional inbox systems occur for the intended receiver when retrieving messages from the inbox. Here the intended receiver must listen to all the stored messages sequentially. Usually, it is only the time/date stamp that is automatically inserted. Although it is possible to jump to the next message, after e.g. listening to the initial 1 part of the message, for instance, it is however, not possible to jump to a particular message from a particular sender. The intended receiver is not able to know the sender and the subject matter of the message beforehand so as to be able to select which messages to listen to and which to ignore. If the intended receiver has access to this information, he will be able to listen to messages regarded as more urgent first, rather than listening to other messages regarded as less important, which may result in his credit being consumed. In order to choose to respond to messages, the intended receiver may want to prioritize some messages first. Currently, this is only possible after listening through all of them and then going back to the start. There is no way of identifying more important messages in the queue.

Furthermore, according to the prior art, there is no standardized method for notification of the sender, that the message has been read, received or listened to (hereinafter read, listened or received is referred to as received).

From the perspective of the intended receiver additional 1 disadvantages with the current solutions occur, as the intended receiver has no control what messages are sent to his inbox. In this respect it is considered a problem that so called stalkers leave messages of obscure nature. Only by pre-defining blocked numbers or blocked types of messages the intended receiver is able to have some control over the received messages but only based on the identity of the sender. Currently, an intended receiver may only identify and skip these messages after listening to at least a part of the message.

A further example of disadvantages of current solutions is the aspect of high costs from a Network and the intended receiver point of view. This disadvantage especially emerges when the intended receiver makes a (possible long distance) call from one telephony network to another telephony network to find out if there are messages in his or her inbox. In this case a real-time connection (sometimes international) has to be set up, which requires the use of various resources to be reserved along the path, resulting into an expensive call. Even in the case that messages are sent, or calls are set up by the Network to notify the intended receiver of the presence of messages (hereinafter both methods of notifying the intended receiver are called alert), the intended receiver may well be out of the country, which also requires the use of resources to be used along the path, resulting in an expensive alert.

Storage space for these messages is possibly on the account of the intended receiver. As messages and especially multimedia messages are growing in size, available storage space may at some point in time become too small to receive additional incoming messages, which leads to denial of access. The intended receiver may solve this problem by acquiring additional storage space, but this may in turn lead to extra costs for the intended receiver. This may be regarded as unfair, because the sender, who is responsible for the size of the messages, bears no costs for the storage facilities of the intended receiver.

US 2002/0101964 Al discloses a voice message system in a communication network, wherein a sender can store a message for an intended receiver in a data storage device. At the end of the message the sender has message options like reviewing, deleting, re-recording, and/or sending the message. After termination of the call the message is no longer accessible to the sender.

It may be advantageous to set forth definitions of certain words and phrases used throughout this patent document: the terms "includes" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with be communicable with, cooperate with, interleave, juxtapose, be proximate to, be bound to or with, have, have a property of, or the like; and the term arrangement means any device, system or part thereof that controls at least one operation, such a device may be Implemented in hardware, firmware or software, or some combination of at least two of the same. It should be noted that the functionality associated with any particular arrangement may be centralized or distributed, whether locally or remotely. In particular, an arrangement may comprise one or more data processors, and associated input/output devices and memory that execute one or more application programs and/or an operating system program. Definitions for certain words and phrases are provided throughout this patent document, those of ordinary skill in the art should understand that in many, if not most instances, such definitions apply to prior, as well as future uses of such defined words and phrases.

### Disclosure of the Invention

It is an object of the present invention to provide a system and method that enables a sender, for example in the course of a telephone call, to store messages that are addressed to an intended receiver and to provide access to these messages without the sender being obstructed by the limitations of an inbox of the intended receiver.

It is a further object of the present invention to provide a terminal and a network node arrangement for use in such a system and for performing such a method.

Further features and advantages are disclosed by embodiments of the system and the method according to the invention.

In a first aspect of the invention there is provided a multi media messaging system in a communications network, arranged for sending and receiving messages between at least one sender and at least one intended receiver, the system comprising:
- at least one storage facility, arranged for storing at least one message, wherein the or each storage facility is assigned to the sender of a message,
- a controlling arrangement, adapted for controlling storage of a message and for controlling access to a stored message;
- an accessing arrangement, arranged for providing access to a stored message, and
- an alerting arrangement, arranged for providing an intended receiver with an alert relating to the storage of a message,
characterized in that, the controlling arrangement is arranged for processing a stored message under control of the sender of the message after final storage thereof or completion of a call.

The invention is based on the novel and inventive insight that by providing to the sender of a message, control over the storage and access of a message for an intended receiver, the above mentioned drawbacks of prior art systems will be completely or at least partially alleviated. Because the sender keeps control over the storage of and access to a stored message, the sender may at all times process a stored message, for example by amending, enhancing, deleting, prioritizing etc. of the message. This contrary to the prior art of record disclosed above, which reveals no disclosure nor provides any suggestion of a system in accordance with the present invention.

The or each storage facility is assigned to the sender of a message. That is, the sender may be the owner or virtual 1 owner or may rent the storage facility. That is, the use of the storage facility will, for example, be at the expense of the sender. Such that the sender can decide whether or not to leave long messages or messages having a large data content, for example.

In an embodiment of the invention, the controlling arrangement comprises means for processing a stored message by a sender, this processing includes at least one of storing, accessing, reading, editing and removing a message stored under the control of the sender.

In a further preferred embodiment of the invention, the alerting arrangement is arranged for controlling the alert by the sender of a message. That is, the sender may have also control over the alert which is provided to the intended receiver. Accordingly, the sender can decide, for example, at which moment in time the alert will be forwarded to the intended receiver, the content of the alert, priority of the alert, etc.

In a yet further embodiment of the invention, the alerting arrangement comprises means arranged for manipulating an alert, this manipulation including at least one of reading, editing and removing an alert under the control of the sender. With this embodiment a sender advantageously may amend an alert, for example in case a message gets priority or if a message for which a previous alert has been provided becomes obsolete, etc.

In a still further embodiment, the invention provides for the inclusion of additional information with a stored message or an alert. Said additional information may comprise one of the group including: a message identifier, at least one identification key for identifying at least one intended receiver, a telephone number, a URL, a message identifier, a subject, a personal identification number for access authorization and verification purposes, urgency of the message, validity or expiration time of the message, type of alert including a call attempt and a multimedia message, number of alerts, location of the storage facility of the message, key dates, message status and flags that will trigger transfer notifiers of status changes to the sender.

With this additional information, a strong tool is provided for processing messages both at the side of the sender and the intended receiver or receivers, for example for prioritizing, listing, presenting etc. of messages.

In order to keep track whether a message has been received or read by the intended receiver, in another embodiment thereof, the invention provides for notifying a sender of a stored message of changes in status of the message or an alert pertaining to a stored message, by providing means to this end at, or by properly arranging, the controlling and alerting arrangements, respectively. The status may comprises one of the group including "sent", "not read", "read", "expired", "reminded" and "settled".

The system according to the invention can be made fully compliant to present communication equipment and systems, by providing access to the controlling arrangement, the accessing arrangement and the alerting arrangement by means of an interface, including a graphical user interface, a voice control interface, an interactive voice response interface and a Dual-Tone Multi-Frequency interface.

For security and reliability reasons, in order to prevent messages being received an read by others than the intended receiver, in a further embodiment of the system according to the invention, the controlling arrangement comprises validating means, arranged for verification and authorization of a subscriber to the communications network attempting to access a stored message, for establishing whether the subscriber is the intended receiver of the message, before granting access to the message by the subscriber.

Preferably, the validating means are arranged for verification and authorization of the subscriber using the additional information.

To make the use of the system flexible and comprehensible to less experienced users, in another embodiment of the invention, the alerting arrangement is arranged for including in the alert information as how to access a stored message.

The or each storage facility of a sender may be distributed over the network, and storage facilities may be optimised for storage and processing of messages dependent on their type or nature, such as but not limited to separate storage facilities for voice mail messages, short messages, email messages and video mail. It will be appreciated that each storage facility may be located or connected to a particular network for providing the best performance and processing of a particular type of message. For example, a video mail storage connected to the Internet and a short message storage connected to a public land mobile network, such as a GSM (global system for telecommunications) network.

In order to provide an as flexible and optimally to use system as possible, in a yet further embodiment of the invention, the controlling and alerting arrangements are arranged for storing and accessing a message and controlling an alert, respectively, under control of the intended receiver of the message.

In such an embodiment, both the sender and the intended receiver may have equal control over and access to stored messages or alerts. However, in another embodiment, the invention provides that the extent of the control can be defined by the sender. That is, the accessing arrangement may be arranged for providing access to an intended receiver of a message under access conditions defined by the sender of the message.

In a preferred embodiment of the invention, there is provided that the alert takes the shape of a form, for processing and displaying by a graphic user interface, this form comprising information of at one least message for the intended receiver. By having the graphic user interface arranged for duplex transfer of data, and wherein the form is an interactive form, a very easy to use message retrieval and alerting system can be realised, meeting the needs of present and future users.

The invention further provides a terminal for use in the system of the invention disclosed above, the terminal comprising control means arranged for interfacing with at least one of the controlling, alerting and accessing arrangements.

The invention also provides a network node arrangement for use in a communications network, the network node arrangement comprises a controlling arrangement, arranged for controlling storage of a message and for controlling access to a stored message; an accessing arrangement, arranged for providing access to a stored message, and an alerting arrangement, arranged for providing an intended receiver with an alert relating to the storage of a message for use in the system of the invention disclosed above.

In a further embodiment of the invention, the network node arrangement may comprise at least one storage facility, arranged for storing at least one message.

The inventions provides also a method of sending and receiving multi media messages in a communications network, between at least one sender and at least one intended receiver of a message, the method comprising the steps of:
- assigning, to the sender of a message, of at least one storage facility arranged for storing at least one message,
- storing, by the sender, of at least one message in the or each storage facility,
- alerting at least one intended receiver by an alert relating to the storage of a message, and
- providing access to a stored message,
characterized in that a stored message is processable under control of the sender of the message after final storage thereof or completion of a call.

In a further embodiment of the method according to the invention, the sender of a message may select a storage facility for storing a message which suits best the objectives and purposes of the sender.

Further embodiments of the method according to the invention are presented in the attached claims, and the advantages and particularities of these embodiments are illustrated above with reference to their system counterparts.

### Brief Description of the Drawings

In the following section, the invention will be described by way of examples of its embodiments with reference to the attached drawings, in which:
fig. 1 shows a prior art message retrieval system as presently used, based on a Voicemail Inbox of the intended receiver;
fig. 2 is a schematic representation of one embodiment of the present invention using the Internet, the Public Switched Telephone Network (PSTN) or Public Land Mobile Network (PLMN);
figs. 3a, 3b and 3c are flowcharts illustrating in detail an embodiment of the method of the invention;
figs. 4a, 4b and 4c show an example of Graphical User Interfaces (GUI) for use with the invention; and
fig. 5 shows a schematic overview of a multimedia messaging system according to the invention.

### Detailed Description of Illustrative Embodiments

The numerous innovative teachings of the present invention will be described in detail with particular reference to the presently preferred exemplary embodiments. However, it should be understood that this class of embodiments provides only a few examples of the many advantageous uses of the innovative teachings herein. In general, statements made in the specification of the present invention do not necessarily delimit any of the claimed invention. Moreover, some statements may apply to some inventive features, but not to others.

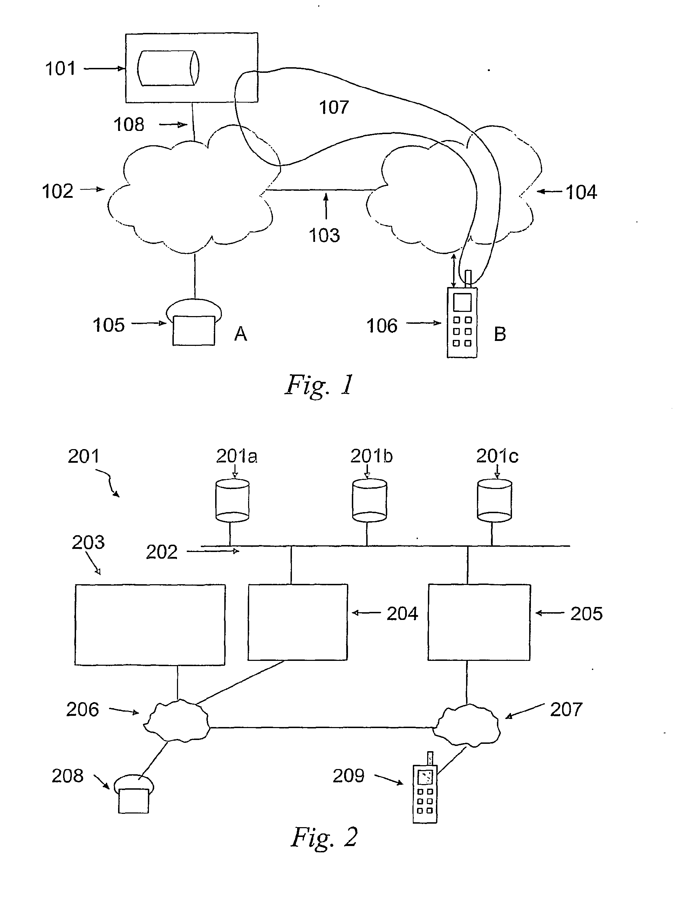

With reference to fig. 1, a prior art message retrieval system is shown, which is based on a Voice mail Inbox of the intended receiver. The system comprises the following elements:
- a voice mail inbox 101 assigned to a subscriber A 105 and having a storage facility for storing voice mail messages;
- a first telephony network 102 to which subscriber A 105 has subscribed;
- a second (e.g. foreign) telephony network 104, to which subscriber B 106 has subscribed and through which subscriber B 106 tries to call subscriber A 105;
- a communication path 103 through which the call set-up is routed from the second telephony network 102 to the first telephony network 104;
- a path 107 through which subscriber B 106 is rerouted to the voice mail inbox 101, if subscriber A 105 is not answering the call, and
- a path 108 through which subscriber A 105 has access to his voice mail inbox 101.

Different from the embodiment shown, wherein the voice mail inbox 101 is under the control and provided by a network operator of the first telephony network 102, the voice mail inbox, in the form of an answering machine, for example, may also be located at the premises of subscriber A 105.

Fig. 2 shows an embodiment of the invention with one or more message storage facilities, also called outboxes 201a, 201b, 201c. The outboxes 201a, 201b, 201c, may optionally be distributed over the network or even over various networks. One or more of the outboxes 201a, 201b, 201c may be dedicated to store particular kind of messages, or may have features that other outboxes lack. Examples of dedicated outboxes are outboxes dedicated for Multimedia Messages (MMS), emails, voice mails, video mail, or Short Messages (SMS). The embodiment shown comprises two options.

A first option is referred to as the ISP Option, wherein one or more of the outboxes 201a, 201b, 201c are provided by an Internet Service Provider (ISP). Each one of the outboxes 201a, 201b, 201c is identified by a Unique Resource Locator (URL) for locating content on the Internet. According to this solution, the outboxes 201a, 201b, 201c are uncoupled from the network provider and may be assigned to a particular subscriber, i.e. sender of messages. The outboxes 201a, 201b, 201c are accessible from any location, if necessary through one or more multimedia gateways 204, 205. The Messages are transported for example over the Internet 202. Rerouting to one of the outboxes 201a, 201b, 201c is provided by the provider (network provider) of the network 206 used by a sender 208, and/or the provider of the network 207 used by an intended receiver 209 of a message and by the ISP. The networks 206, 207 may comprise, for example, PSTN, PLMN or the Internet.

In a second option (not shown), which is referred to as the "PSTN/PLMN option", one or more outboxes 201a, 201b, 201c provided by a network provider are assigned to a sender 208, wherein the network comprises PSTN or PLMN 202. This system also can easily coexist with a prior art voicemail iInbox system 203. The multimedia gateway 204 for the first network 206 routes an unanswered call of a sender 208 to at least one of the Outboxes 201a, 201b, 201c of the sender 208. The multimedia gateway 205 for the second network 205 routes the access requests to messages destined for the intended receiver 209 to a respective one of the outboxes 201a, 201b, 201c of the sender 208.

Both options can easy coexist with a prior art voicemail inbox system 203.

For storing and retrieving or accessing messages, the following steps are performed in the embodiment of fig 2.

One or more of the outboxes 201a, 201b, 201c of sender 208 is selected by the sender 208 during the rerouting or a priori. The sender 208 may select one of the outboxes 201a, 201b, 201c, which is accessible for the intended receiver, or may select an outbox which is suitable for a particular purpose.

The sender 208 leaves a message in one or more of the selected outboxes 201a, 201b, 201c, and indicates the intended receiver 209, or a plurality of intended receivers, for whom the message is intended.

The multimedia messaging system 201 initiates an alert to the intended receiver(s) 209. This alert could be an SMS, MMS, e-mail or a multimedia message of any other kind or a pre-recorded message, which is played after a successful call attempt by one of the outboxes 201a, 201b, 201c. In the latter case the sender 208 chooses the number of trials for a call set-up by the multimedia messaging system 201. The sender also selects the type of message to be used as alert. The alert to the intended receiver(s) 209 comprises the following elements: the URL, the subject and/or content of the message, the sender, and optionally a Personal Identification Number (PIN).

The intended receiver 209 connects (from any location) to sender's multimedia messaging system 201 using the provided URL; the intended receiver 209 uses either a real-time connection or a non-real-time connection.

When the intended receiver 209 is connected to an outbox 201a, 201b, 201c of the sender 208, the intended receiver 209 must identify the message in one of the sender's outboxes 201a, 201b, 201c with the intended receiver's identity (e.g. telephone number) and/or the subject, for example. Optionally validation means are provided for verification and authorisation, whereby the intended receiver 209 is identified by the intended receiver's Caller Line Identification (CLI) or URL, which is compared with the stored CLI or URL in additional information of the message for the intended receiver 209. Additionally the intended receiver 209 may have to be authorised after using the correct provided PIN. When the intended receiver 209 retrieves the message(s) from another telephone, and the intended receiver 209 has identified himself to the network on this telephone, verification and authorisation are implied with the Single Sign On (SSO) Identity of the intended receiver 209. Alternatively, the intended receiver 209 connects to the multimedia messaging system 201 over the Internet 202 using a browser or dedicated software. After verification and authorisation, the Message is sent to the intended receiver 209.

In the PSTN/PLMN option, the parameters differ in comparison with the ISP option in the following manner.

One of the outboxes 201a, 201b, 201c of sender 208 is identified with the telephone number of sender 208.

The rerouting to one of the outboxes 201a, 201b, 201c, in case a call is not answered or the like, is provided by the Network Provider.

What type of message and the way that it should be delivered is chosen by the sender 208 using for example voice control, interactive voice response (IVR) or DTMF tones produced by the telephone. The Alert may comprise one or more messages to the intended receiver 209 generated by the multimedia messaging system 201.

Validation, comprising verification and authorisation of the intended receiver, is realized by recognition of the intended receiver's CLI.

When the multimedia messaging system 201 was instructed by the sender 208 to call the intended receiver 209, and subsequently the multimedia messaging system 201 calls the intended receiver 209 to deliver an alert, the intended receiver 209 may choose either to receive the complete message instantly or choose to let the multimedia messaging system 201 try to set up a call with sender 208.

Although both options as described here comprise basically the same steps, distinctions are made when details refer specifically to one option or the other. When reference is made to elements of the first option, it should be noted that the same applies to the second option unless otherwise stated.

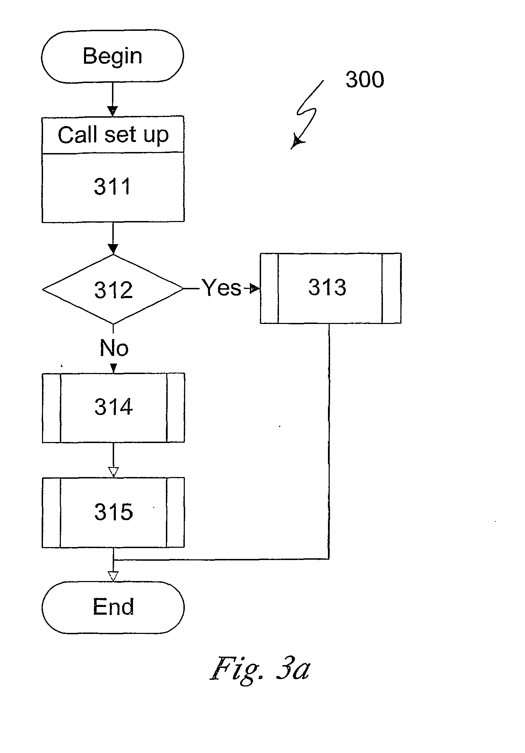

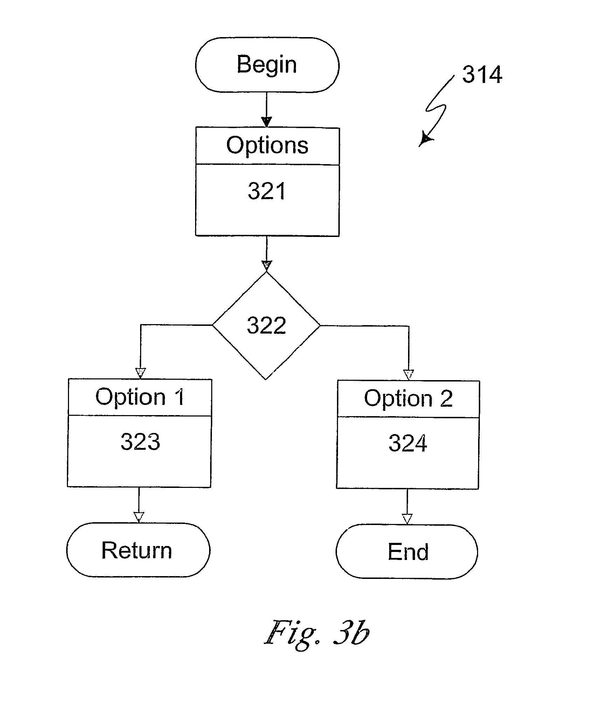

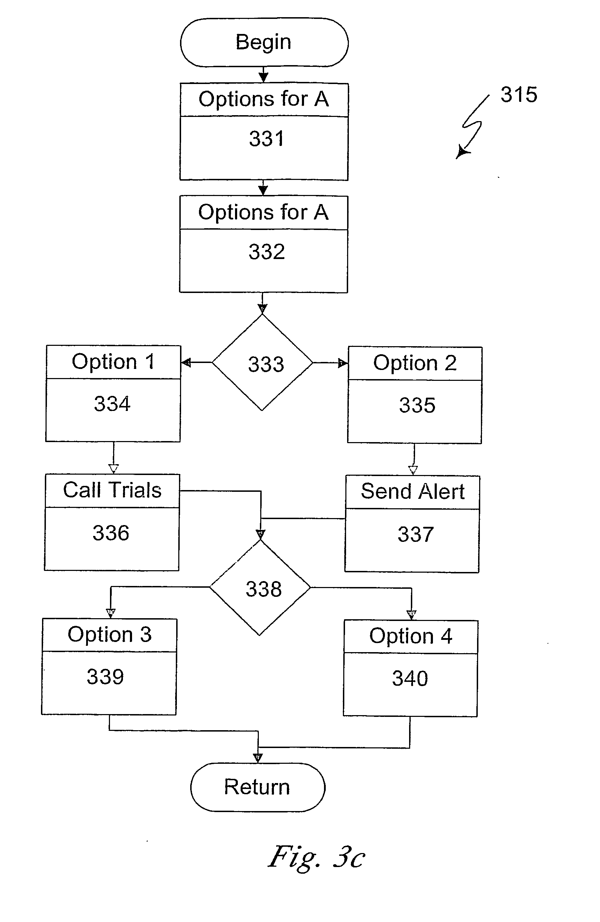

Figs. 3a, 3b and 3c illustrate the basic method of the invention. Referring now to FIG. 3a, there is illustrated a flow chart diagram of a method 300, in accordance with the present invention, for recording and alerting of calls that have been forwarded to the outbox.

In a first (Step 311), an incoming call, which is directed towards a particular user station of an intended receiver 209 (see fig. 2) is received and routed to the user station of the intended receiver 209 at an exchange of the network 207. The user station 209 is monitored (Step 312) to determine if the call is answered within a predetermined number of rings or within a predetermined time period. If the call is answered, then the call is handled according to normal call processing procedures (Step 313). If the call is not answered within the prescribed time, however, then the original call routing connection is released and the call is rerouted to the one outbox of sender (Step 314), or to the selected one of the outboxes 201a, 201b, 201c of sender.

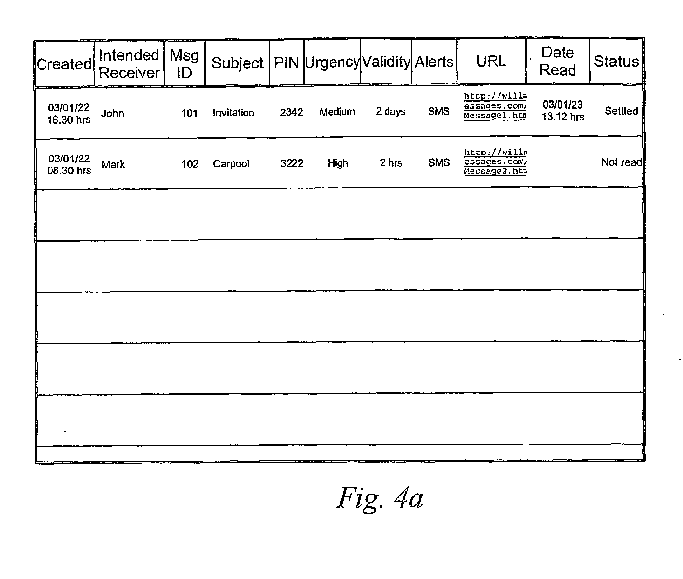

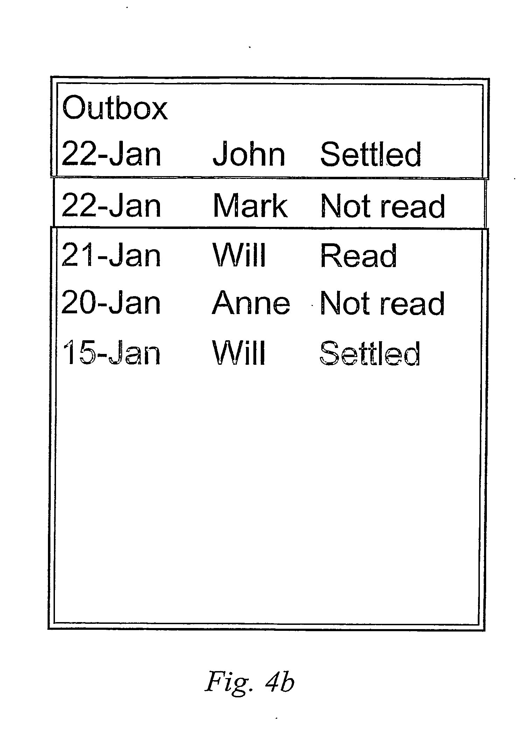

Referring to fig. 3b, which is a detail of Step 314, sender is prompted by the multimedia messaging system 201 with the options 321 to record a message (Step 323) or not (Step 324). If sender chooses 322 to record a message, he or she has the possibility to control the method and kind of information of the message using IVR or DTMF Control or, as is the case in the ISP option, by means of a graphical user interface (GUI) (see figs. 4a and 4b). After recording of a message the process is continued (Step 325). When no message is recorded the process ends (Step 326).

Referring to fig. 3c (detail of Step 315), when sender has recorded a message for the intended receiver, the multimedia messaging system 201 offers the possibility to alert the intended receiver. The outbox prompts sender A (Step 331) for Option (1) to alert the intended receiver by trying to call him, or Option (2) to send the intended receiver an alert by sending a notification of a message ready to be retrieved by the intended receiver. The multimedia messaging system 201 also proposes (Step 332) to send to sender a notification of delivery of the alert to the intended receiver (Option (3)) or not (Option (4)). If sender makes a choice (Step 333) for Option (1), he or she enters the number N of call trials to be placed by the multimedia messaging system 201 (Step 334). The multimedia messaging system 201 will then call the intended receiver N times (Step 336). If the multimedia messaging system 201 made a successful call-set up with the intended receiver, the multimedia messaging system 201 plays a (standardized or pre-recorded) message, stating that a message has been left by sender for the intended receiver. If, on the other, hand sender makes a choice 333 for Option (2), he also chooses the kind of message to be sent to the intended receiver. The kind of message comprises SMS, MMS- or E-Mail. The multimedia messaging systems 201 will I then send the message to the intended receiver. If sender previously has chosen at 332 for option (3), the multimedia messaging system 201 sends a notification (step 339) that the alert was successful or not. If sender has previously chosen at 332 for option (4), no notification will be sent (step 340) by the multimedia messaging system.201.

Referring to fig. 4a, a GUI is described to be used by users of a computer with a normal display (as opposed to the display of mobile devices like a mobile phone), for recording, accessing and controlling messages that are stored in the outbox: The alert takes the shape of a form, comprising various fields that enable the user to register additional information to a message and for example to view the current status of a message.

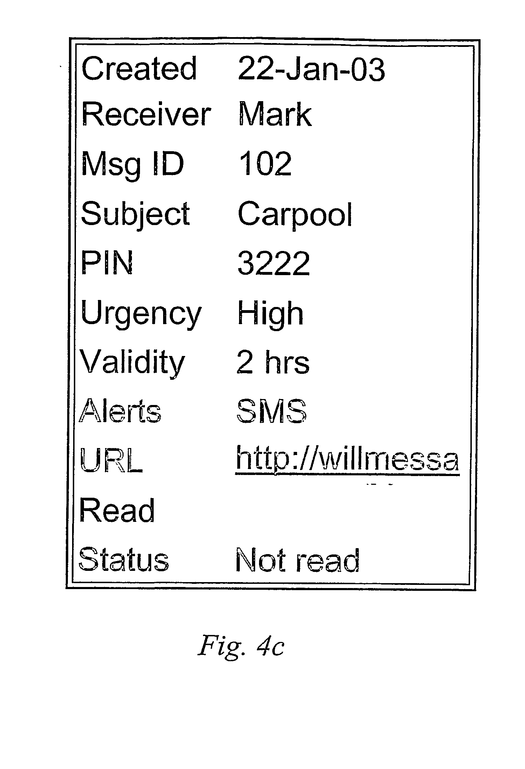

Referring now to fig. 4b, an alternative GUI is described which has similar possibilities for recording, accessing and controlling messages that are stored in the outbox. This format allows also users of a mobile device like a mobile phone, with much smaller displays, to use a GUI. By scrolling up and down over the display, the user is able to view basic information on messages. Details of a message appear on the same display as shown in fig. 4c, when the user selects a particular message. In the example of fig. 4b "22-Jan Mark Not read" is chosen, which means that on January 22nd a message for Mark was recorded, which is not read yet. In fig. 4c details of this message are shown. By making the GUI bidirectional an interactive form can be presented and used for alerting purposes, such that changes in the status of an alert or message, such as "read" can be easily transferred and processed.

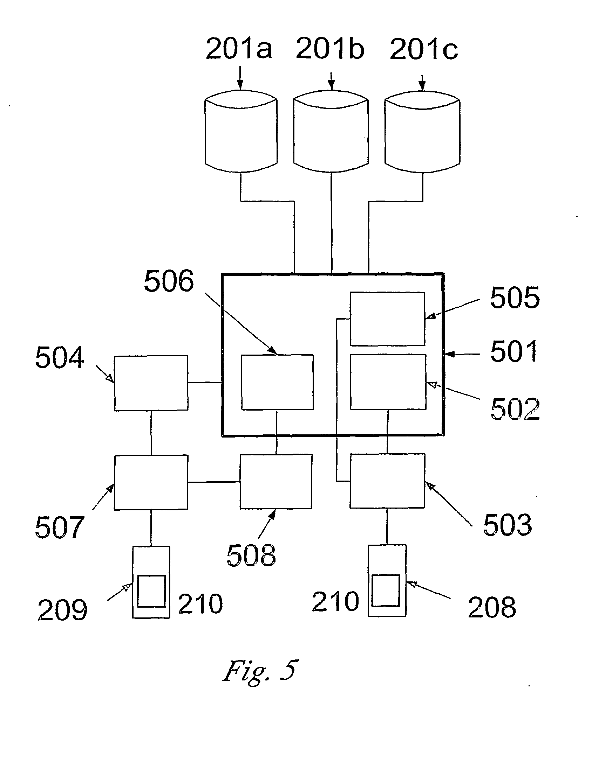

Referring now to fig. 5, a multimedia messaging system in a network, being a telecommunications network or data network, is shown, arranged for sending and receiving messages by subscribers to the network according to the present invention, where the system comprises a:
- a controlling arrangement 501 adapted to store messages in one or more storage facilities (outboxes) 201a, 201b, 201c;
- means 502 for reading, editing, removing the stored messages and alerts, or adding, editing or removing additional 1 information to a stored message or an alert;
- an interface 503 such as a graphical 1 user interface, a voice control interface, interactive voice response interface or a Dual-Tone Multi-Frequency interface to control or access the controlling arrangements by the sender 208;
- an alerting arrangement 504 adapted to provide the intended receiver 209 with an alert, such as an indication of the presence of the message at the one or more storage facilities, and information as how to access the stored message, for example;
- means 505 arranged for notifying the sender 208 of changes in a status of the stored message or the alert;
- validation means 506 arranged for verification and authorisation of a subscriber to the telecommunications network or data network, attempting to access a stored message in order to establish if the subscriber is the intended receiver 209 before granting the subscriber access to the message;
- an interface 507 such as a graphical user interface, a voice control interface, interactive voice response interface or a Dual-Tone Multi-Frequency interface to access the controlling arrangement 501 by the intended receiver 209; and
- an accessing arrangement 508, adapted for providing access to the the stored messages.

For accessing and, if applicable, controlling of stored messages and alerts subscriber terminal equipment 208 and 209 is provided with control means 210 arranged for interfacing with at least one of the controlling 501, alerting 504 and accessing arrangements 508.

The controlling 501, alerting 504 and accessing arrangements 508 may be embodied as a single network node arrangement, optionally provided with storage facilities (outboxes) 201a, 201b, 201c for use in a communications network, for performing the method according to the invention.

Although the aforementioned steps are illustrated by particular embodiments of the invention, it will be appreciated by those skilled in the art that some of these steps may be omitted or that these steps may occur in a different order or may occur simultaneously.

## Claims

1. A multi media messaging system (201) in a communications network (202, 206, 207), arranged for sending and receiving messages between at least one sender (208) and at least one intended receiver (209), said system comprising:
- at least one storage facility (201a, 201b, 201c), arranged for storing at least one message, wherein the or each storage facility (201, 201b, 201c) is assigned to the sender (208) of a message,
- a controlling arrangement (501), adapted for controlling storage of a message and for controlling access to a stored message,
- an accessing arrangement (508), arranged for providing access to a stored message, and
- an alerting arrangement (504), arranged for providing an intended receiver (209) with an alert relating to the storage of a message,
**characterized in that** said controlling arrangement (501) is arranged for processing a stored message under control of said sender (208) of said message after final storage thereof or completion of a call.

2. A system according to claim 1,- wherein said processing includes at least one of storing, accessing, reading, editing and removing a message stored under the control of said sender (208).

3. A system according to claim 1 or 2, wherein said controlling arrangement (501) is arranged for selecting a storage facility (201, 201b, 201c) by said sender (208) for storing a message.

4. A system according to any of the previous claims, wherein said alerting arrangement (504) is arranged for controlling said alert by said sender (208) of a message.

5. A system according to claim 4, wherein said alerting arrangement (504) comprises means arranged for manipulating an alert, said manipulation including at least one of reading, editing and removing
an alert under the control of said sender (208).

6. A system according to any of the previous claims, wherein said controlling arrangement (501) is arranged for including additional information with a stored message.

7. A system according to any of the previous claim, wherein said alerting arrangement (504) is arranged for including additional information with an alert.

8. A system according to claim 6 or 7, wherein said additional information comprises one of the group including: a message identifier, at least one identification key for identifying at least one intended receiver, a telephone number, a URL, a message identifier, a subject, a personal identification number for access authorization and verification purposes, urgency of the message, validity or expiration time of the message, type of alert including a call attempt and a multimedia message, number of alerts, location of the storage facility of the message, key dates, message status and flags that will trigger transfer of notifiers of status changes to the sender.

9. A system according to any of the previous claims, wherein said controlling arrangement (501) comprises means arranged for notifying a sender (208) of a stored message of changes in a status of said message.

10. A system according to any of the previous claims, wherein said alerting arrangement (504) comprises means arranged for notifying a sender (208) of an alert of changes in a status of said alert.

11. A system according to claim 9 or 10, wherein said status comprises one of the group including "sent", "not read", "read", "expired", reminded" and "settled".

12. A system according to any of the preceding claims wherein said controlling arrangement (501) is accessible by means of an interface, including a graphical user interface, a voice control interface, an interactive voice response interface and a Dual-Tone Multi-Frequency interface.

13. A system according to any of the preceding claims wherein said alerting arrangement (504) is accessible by means of an interface, including a graphical user interface, a voice control interface, an interactive voice response interface and a Dual-Tone Multi-Frequency interface.

14. A system according to any of the previous claims, wherein said controlling arrangement (501) comprises validating means, arranged for verification and authorization of a subscriber to the communications network (202, 206, 207) attempting to access a stored message, for establishing whether said subscriber is the intended receiver (209) of said messages, before granting access to said message by said subscriber.

15. A system according to claim 14, dependent on claim 6, 7 or 8, wherein said validating means are arranged for verification and authorization of said subscriber using said additional information.

16. A system according to any of the previous claims, wherein said alerting arrangement (504) is arranged for including in said alert information as how to access a stored message.

17. A system according to any of the previous claims, wherein said controlling arrangement (501) is arranged for storing and accessing a message under control of the intended receiver (209) of said message.

18. A system according to any of the previous claims, wherein said alerting arrangement (504) is arranged for controlling said alert by said intended receiver (209).

19. A system according to claim 17 or 18, wherein the extent of said control is defined by said sender (208).

20. A system according to any of the previous claims, wherein said accessing arrangement (508) is arranged for providing access to an intended receiver (209) of a message under access conditions defined by said sender (208) of said message.

21. A system according to any of the previous claims, wherein said accessing arrangement (508) is accessible by means of an interface, including a graphical user Interface, a voice control Interface, an interactive voice response interface and a Dual-Tone Multi-Frequency interface.

22. A system according to any of the previous claims, wherein said storage facility (201a, 201b, 201c) is distributed over said communications network (202, 206, 207).

23. A system according to any of the previous claims, arranged for sending and receiving messages including voice mail messages, short messages, email messages and video mail.

24. A system according to any of the previous claims, arranged for providing alerts in message form, including voice mail messages, short messages, email messages and video mail.

25. A system according to any of the previous claims, wherein said alert takes the shape of a form for processing and displaying by a graphic user interface, said form comprising information of at least one message for said intended receiver (209).

26. A system according to claim 25, wherein said graphic user interface is arranged for duplex transfer of data, and wherein said forum is an interactive form.

27. A system according to any of the previous claims, wherein said communications network (202, 206, 207) comprises at least one of group comprised by telecommunications and data networks, including the Internet, a Public Switched Telephone Network, an Integrated Services Digital network, and a Public Land Mobile Network.

28. A terminal for use in the system according to any of the previous claims, said terminal comprising control means arranged for interfacing with at least one of said controlling (501), alerting (504) and accessing (508) arrangements.

29. A network node arrangement for use in a communications network (202, 206, 207), according to any of the claims 1-27, said network node arrangement comprises a controlling arrangement (506), arranged for controlling storage of a message and for controlling access to a stored message; an accessing arrangement (508), arranged for providing access to a stored message, and an alerting arrangement (504), arranged for providing an intended receiver (209) with an alert relating to the storage of a message.

30. A method of sending and receiving multi media messages in a communications network (202, 206, 207), between at least one sender (208) and at least one intended receiver (209) of a message, said method comprising the steps of:
- assigning, to said sender (208) of a message, of at least one storage facility (201a, 201b, 201c) arranged for storing at least one message,
- storing, by said sender (208), of at least one message in the or each storage facility (201a, 201b, 201c),
- alerting at least one intended receiver (209) by an alert relating to the storage of a message, and
- providing access to a stored message,
**characterized in that** a stored message is processable under control of said sender (208) of said message after final storage thereof or completion of a call.

31. A method according to claim 30, wherein said processing includes at least one of storing, accessing, reading, editing and removing said message under the control of said sender (208).

32. A method according to claim 30 or 31, wherein said sender (208) selects a storage facility (201, 201b, 201c) for storing a message.

33. A method according to any of the claims 30 - 32, further comprising the step of controlling said alert by said sender (208) of a message.

34. A method according to claims 33, further comprising the step of manipulating an alert, said manipulation including at least one of reading, editing and removing said alert under the control of said sender (208).

35. A method according to any of the claims 30 - 34, further comprising the step of including additional information with a stored message.

36. A method according to any of the claims 30 - 35, further comprising the step of including additional information with an alert.

37. A method according to claim 35 or 36, wherein n said additional information comprises one of the group Including: a message identifier, at least one identification key for identifying at least one intended receiver, a telephone number, a URL. a message identifier, a subject, a personal identification number for access authorization and verification purposes, urgency of the message, validity or expiration time of the message, type of alert including a call attempt and a multimedia message, number of alerts, location of the storage facility of the message, key dates, message status and flags that will trigger transfer of notifiers of status changes to the sender (208).

38. A method according to any of the claims 30 - 37, further comprising the step of notifying a sender (208) of a stored message of changes in a status of said message.

39. A method according to any of the claims 30 - 38, further comprising the step of notifying a sender (208) of an alert of changes in a status of said alert.

40. A method according to claim 38 or 39, wherein said status comprises one of the group including "sent", "not read", "read", "expired", "reminded" and "settled".

41. A method according to any of the claims 30 - 40, further comprising the step of validating a subscriber to the communications network (202. 206. 207) attempting to access a stored message, for establishing whether said subscriber is the intended receiver (209) of said message, before granting access to said message by said subscriber, said validation includes verification and authorization of said subscriber.

42. A method according to claim 41. dependent on claim 35, 36 or 37. wherein said validation of said subscriber is performed using said additional information.

43. A method according to any of the claims 30 - 42, further comprising the step of including in said alert information as how to access a stored message.

44. A method according to any of the claims 30 - 43, further comprising the step of storing and accessing a message under control of the intended receiver of said message.

45. A method according to any of the claims 30 - 44, further comprising the step of controlling said alert by said intended receiver.

46. A method according to claim 44 or 45, wherein the extent of said control is defined by said sender.

47. A method according to any of the claims 30 - 46, further comprising the step of providing access to an intended receiver of a message under access conditions defined by said sender of said message.

48. A method according to any of the claims 30 - 47, further comprising the step of sending and receiving messages including voice mail messages, multimedia messages, short messages, email messages and video mail.

49. A method according to any of the claims 30 - 48, further comprising the step of providing alerts in message form, including voice mail messages, multimedia messages, short messages, email messages and video mail.

50. A method according to any of the claims 30 - 49, further comprising the step of providing said alert with the shape of an interactive form, for processing and displaying by a graphic user interface, said form comprising information of at least one message for said intended receiver.

## Patentansprüche

1. Multimedia-Nachrichtensystem (201) in einem Kommunikationsnetz (202, 206, 207), ausgelegt zum Senden und Empfangen von Nachrichten zwischen zumindest einem Sender (208) und zumindest einem beabsichtigen Empfänger (209), wobei das System umfasst:
- zumindest eine Speichereinrichtung (201 a, 201 b, 201 c), ausgelegt zum Speichern zumindest einer Nachricht, wobei die oder jede Speichereinrichtung (201 a, 201 b, 201 c) dem Sender (208) einer Nachricht zugewiesen wird,
- eine Steueranordnung (501), ausgelegt zum Steuern der Speicherung einer Nachricht und zum Steuern des Zugriffs auf eine gespeicherte Nachricht,
- eine Zugriffsanordnung (508), ausgelegt zum Bereitstellen eines Zugriffs auf eine gespeicherte Nachricht, und
eine Alarmierungsanordnung (504), ausgelegt zum Bereitstellen eines beabsichtigten Empfängers (209) mit einer Alarmierung in Bezug auf die Speicherung einer Nachricht,
**dadurch gekennzeichnet, dass** die Steueranordnung (501) ausgelegt ist zum Verarbeiten einer gespeicherten Nachricht unter Steuerung des Senders (208) der Nachricht, nach der letzten Speicherung davon oder Beendigung eines Anrufs.

2. System nach Anspruch 1, wobei die Verarbeitung zumindest eines umfasst aus Speichern, Zugreifen, Lesen, Editieren und Entfernen einer Nachricht, die unter der Steuerung des Senders (208) gespeichert wurde.

3. System nach Anspruch 1 oder 2, wobei die Steueranordnung (501) ausgelegt ist zum Auswählen einer Speichereinrichtung (201, 201 b, 201 c) durch den Sender (208) zum Speichern einer Nachricht.

4. System nach irgendeinem der vorhergehenden Ansprüche, wobei die Alarmierungsanordnung (504) ausgelegt ist zum Steuern der Alarmierung durch den Sender (208) einer Nachricht.

5. System nach Anspruch 4, wobei die Alarmierungsanordnung (504) ein Mittel umfasst, das ausgelegt ist zum Manipulieren einer Alarmierung, wobei das Manipulieren zumindest eines umfasst aus Lesen, Editieren und Entfernen einer Alarmierung unter der Steuerung des Senders (208).

6. System nach irgendeinem der vorhergehenden Ansprüche, wobei die Steueranordnung (501) ausgelegt ist zum Aufnehmen einer zusätzlichen Information in eine gespeicherte Nachricht.

7. System nach irgendeinem der vorhergehenden Ansprüche, wobei die Alarmierungsanordnung (504) ausgelegt ist zum Aufnehmen einer zusätzlichen Information in einer Alarmierung.

8. System nach Anspruch 6 oder 7, wobei die zusätzliche Information eines aus der Gruppe umfasst, die aufweist: einen Nachrichtenidentifikator, zumindest einen Identifikationsschlüssel zum Identifizieren zumindest eines vorgesehenen Empfängers, eine Telefonnummer, eine URL, einen Nachrichtenidentifikator, ein Subjekt, eine persönliche Identifikationsnummer für Zugriffsautorisierung und Verifikationsgründe, Dringlichkeit der Nachricht, Gültigkeit oder Verfallszeit der Nachricht, Art der Alarmierung einschließlich eines Anrufsversuchs und einer Multimedianachricht, Anzahl der Alarmierungen, Ort der Speichereinrichtung der Nachricht, Schlüsseldaten, Nachrichtenstatus und Flags, die einen Transfer von Benachrichtigungen von Statusänderungen an den Sender auslösen.

9. System nach irgendeinem der vorherigen Ansprüche, wobei die Steueranordnung (501) ein Mittel umfasst, das ausgelegt ist zum Benachrichtigen eines Senders (208) bezüglich einer gespeicherten Nachricht von Änderungen in einem Status der Nachricht.

10. System nach irgendeinem der vorherigen Ansprüche, wobei die Alarmierungsanordnung (504) ein Mittel umfasst, das ausgelegt ist zum Benachrichtigen eines Senders (208) bezüglich einer Alarmierung von Änderungen in einem Status der Alarmierung.

11. System nach Anspruch 9 oder 10, wobei der Status eines umfasst aus der Gruppe, die aufweist: "gesendet", "nicht gesendet", "gelesen", "verfallen", "erinnert" und "erledigt".

12. System nach irgendeinem der vorhergehenden Ansprüche, wobei die Steueranordnung (501) mittels einer Schnittstelle zugreifbar ist, einschließlich einer graphischen Nutzerschnittstelle, einer Sprachsteuerschnittstelle, einer interaktiven Sprachantwortschnittstelle und einer Dual-Tone-Multi-Frequency-Schnittstelle.

13. System nach irgendeinem der vorhergehenden Ansprüche, wobei die Alarmierungsanordnung (504) mittels einer Schnittstelle zugreifbar ist, einschließlich einer graphischen Nutzerschnittstelle, einer Sprachsteuerschnittstelle, einer interaktiven Sprachantwortschnittstelle und einer Dual-Tone-Multi-Frequency-Schnittstelle.

14. System nach irgendeinem der vorhergehenden Ansprüche, wobei die Steueranordnung (501) ein Validierungsmittel umfasst, das ausgelegt ist zum Verifizieren und Autorisieren eines Teilnehmers des Kommunikationsnetzes (202, 206, 207), der einen Zugriff auf eine gespeicherte Nachricht versucht, um festzustellen, ob der Teilnehmer der beabsichtigte Empfänger (209) der Nachricht ist, bevor ein Zugriff auf die Nachricht durch den Teilnehmer gewährt wird.

15. System nach Anspruch 14, wenn dieser von Anspruch 6, 7 oder 8 abhängt, wobei das Validierungsmittel ausgelegt ist zum Verifizieren und Autorisieren des Teilnehmers unter Verwendung der zusätzlichen Information.

16. System nach irgendeinem der vorhergehenden Ansprüche, wobei die Alarmierungsanordnung (504) ausgelegt ist zum Aufnehmen in den Alarmierungsinformationen, wie auf eine gespeicherte Nachricht zugegriffen wird.

17. System nach irgendeinem der vorhergehenden Ansprüche, wobei die Steueranordnung (501) ausgelegt ist zum Speichern und für einen Zugriff auf eine Nachricht unter Steuerung des beabsichtigten Empfängers (209) der Nachricht.

18. System nach irgendeinem der vorhergehenden Ansprüche, wobei die Alarmierungsanordnung (504) ausgelegt ist zum Steuern der Alarmierung durch den beabsichtigten Empfänger (209).

19. System nach Anspruch 17 oder 18, wobei das Ausmaß der Steuerung durch den Sender (208) definiert wird.

20. System nach irgendeinem der vorhergehenden Ansprüche, wobei die Zugriffsanordnung (508) ausgelegt ist zur Bereitstellung eines Zugriffs auf einen beabsichtigten Empfänger (209) einer Nachricht, unter Zugriffsbedingungen, die durch den Sender (208) der Nachricht definiert sind.

21. System nach irgendeinem der vorhergehenden Ansprüche, wobei die Zugriffsanordnung (508) mittels einer Schnittstelle zugreifbar ist, einschließlich einer graphischen Nutzerschnittstelle, einer Sprachsteuerschnittstelle, einer interaktiven Sprachantwortschnittstelle und einer Dual-Tone-Multi-Frequency-Schnittstelle.

22. System nach irgendeinem der vorhergehenden Ansprüche, wobei die Speichereinrichtung (201 a, 201 b, 201 c) über das Kommunikationsnetz (202, 206, 207) verteilt ist.

23. System nach irgendeinem der vorhergehenden Ansprüche, ausgelegt zum Senden und Empfangen von Nachrichten, einschließlich von Sprachnachrichten, Kurznachrichten, Email-Nachrichten und Videonachrichten.

24. System nach irgendeinem der vorhergehenden Ansprüche, ausgelegt zum Bereitstellen von Alarmierungen in Nachrichtenform, einschließlich von Sprachnachrichten, Kurznachrichten, Email-Nachrichten und Videonachrichten.

25. System nach irgendeinem der vorhergehenden Ansprüche, wobei die Alarmierung die Gestalt einer Form zum Verarbeiten und Anzeigen durch eine graphische Nutzerschnittstelle annimmt, wobei die Form eine Information von zumindest einer Nachricht für den beabsichtigten Empfänger (209) umfasst.

26. System nach Anspruch 25, wobei die graphische Nutzerschnittstelle ausgelegt ist für einen doppelten Transfer von Daten, und wobei die Form eine interaktive Form ist.

27. System nach irgendeinem der vorhergehenden Ansprüche, wobei das Kommunikationsnetz (202, 206, 207) zumindest eines aus einer Gruppe umfasst, die aus Telekommunikations- und Datennetzen ausgebildet ist, einschließlich dem Internet, einem öffentlichem Telefonnetz, einem integrierten Digitaldienstnetz und einem öffentlichen landgestützten Mobilfunknetz.

28. Endgerät zur Verwendung in dem System nach irgendeinem der vorhergehenden Ansprüche, wobei das Endgerät ein Steuermittel umfasst, das ausgelegt ist zur Ausbildung einer Schnittstelle mit zumindest einem aus der Steuer- (501), Alarmierungs- (504) und Zugriffs- (508) Anordnung.

29. Netzknotenanordnung zur Verwendung in einem Kommunikationsnetz (202, 206, 207) nach irgendeinem der Ansprüche 1 - 27, wobei die Netzknotenanordnung umfasst eine Steueranordnung (506), die ausgelegt ist zum Steuern der Speicherung einer Nachricht und zum Steuern des Zugriffs auf eine gespeicherte Nachricht; eine Zugriffsanordnung (508), die ausgelegt ist zum Bereitstellen eines Zugriffs auf eine gespeicherte Nachricht, und eine Alarmierungsanordnung (504), die ausgelegt ist zum Bereitstellen eines beabsichtigten Empfängers (209) mit einer Alarmierung in Bezug auf die Speicherung einer Nachricht.

30. Verfahren zum Senden von und zum Zugriff auf Multimedianachrichten in einem Kommunikationsnetz (202, 206, 207), zwischen zumindest einem Sender (208) und zumindest einem beabsichtigten Empfänger (209) einer Nachricht, wobei das Verfahren die Schritte umfasst zum:
- Zuweisen, dem Sender (208) einer Nachricht, von zumindest einer Speichereinrichtung (201 a, 201 b, 201 c), die ausgelegt ist zum Speichern zumindest einer Nachricht,
- Speichern, durch den Sender (208), zumindest einer Nachricht in der oder in jeder Speichereinrichtung (201 a, 201 b, 201 c),
- Alarmieren zumindest eines beabsichtigten Empfängers (209) durch eine Alarmierung in Bezug auf die Speicherung einer Nachricht, und
- Bereitstellung eines Zugriffs zu einer gespeicherten Nachricht,
**dadurch gekennzeichnet, dass** eine gespeicherte Nachricht unter Steuerung des Senders (208) der Nachricht verarbeitbar ist, nach der letzten Speicherung davon oder Beendigung eines Anrufs.

31. Verfahren nach Anspruch 30, wobei die Verarbeitung zumindest eines umfasst aus Speichern, Zugreifen, Lesen, Editieren und Entfernen der Nachricht unter der Steuerung des Senders (208).

32. Verfahren nach Anspruch 30 oder 31, wobei der Sender (208) eine Speichereinrichtung (201, 201 b, 201 c) zum Speichern einer Nachricht auswählt.

33. Verfahren nach irgendeinem der Ansprüche 30 - 32, ferner mit dem Schritt zum Steuern der Alarmierung durch den Sender (208) einer Nachricht.

34. Verfahren nach Anspruch 33, ferner mit dem Schritt zum Manipulieren einer Alarmierung, wobei das Manipulieren zumindest eines umfasst aus Lesen, Editieren und Entfernen einer Alarmierung unter der Steuerung des Senders (208).

35. Verfahren nach irgendeinem der Ansprüche 30 - 34, ferner mit dem Schritt zum Aufnehmen einer zusätzlichen Information in eine gespeicherte Nachricht.

36. Verfahren nach irgendeinem der Ansprüche 30 - 35, ferner mit dem Schritt zum Aufnehmen einer zusätzlichen Information in eine Alarmierung.

37. Verfahren nach Anspruch 35 oder 36, wobei die zusätzliche Information eines aus der Gruppe umfasst, die aufweist: einen Nachrichtenidentifikator, zumindest einen ldentifikationsschlüssel zum Identifizieren zumindest eines vorgesehenen Empfängers, eine Telefonnummer, eine URL, einen Nachrichtenidentifikator, ein Subjekt, eine persönliche Identifikationsnummer für Zugriffsautorisierung und Verifikationsgründe, Dringlichkeit der Nachricht, Gültigkeit oder Verfallszeit der Nachricht, Art der Alarmierung einschließlich eines Anrufsversuchs und einer Multimedianachricht, Anzahl der Alarmierungen, Ort der Speichereinrichtung der Nachricht, Schlüsseldaten, Nachrichtenstatus und Flags, die einen Transfer von Benachrichtigungen von Statusänderungen an den Sender (208) auslösen.

38. Verfahren nach irgendeinem der Ansprüche 30 - 37, ferner mit dem Schritt zum Benachrichtigen eines Senders (208) bezüglich einer gespeicherten Nachricht von Änderungen in einem Status der Nachricht.

39. Verfahren nach irgendeinem der Ansprüche 30 - 38, ferner mit dem Schritt zum Benachrichtigen eines Senders (208) bezüglich einer Alarmierung von Änderungen in einem Status der Alarmierung.

40. Verfahren nach Anspruch 38 oder 39, wobei der Status eines umfasst aus der Gruppe, die aufweist: "gesendet", "nicht gesendet", "gelesen", "verfallen", "erinnert" und "erledigt".

41. Verfahren nach irgendeinem der Ansprüche 30 - 40, ferner mit dem Schritt zum Validieren eines Teilnehmers des Kommunikationsnetzes (202, 206, 207), der einen Zugriff auf eine gespeicherte Nachricht versucht, um festzustellen, ob der Teilnehmer der beabsichtigte Empfänger (209) der Nachricht ist, bevor ein Zugriff auf die Nachricht durch den Teilnehmer gewährt wird, wobei das Validieren eine Verifzierung und eine Autorisierung des Teilnehmers umfasst.

42. Verfahren nach Anspruch 41, wenn dieser von Anspruch 35, 36 oder 37 abhängt, wobei das Validieren des Teilnehmers unter Verwendung der zusätzlichen Information durchgeführt wird.

43. Verfahren nach irgendeinem der Ansprüche 30 - 42, ferner mit dem Schritt zum Aufnehmen in den Alarmierungsinformationen, wie auf eine gespeicherte Nachricht zugegriffen wird.

44. Verfahren nach irgendeinem der Ansprüche 30 - 43, ferner mit dem Schritt zum Speichern und für einen Zugriff auf eine Nachricht unter Steuerung des beabsichtigten Empfängers der Nachricht.

45. Verfahren nach irgendeinem der Ansprüche 30 - 44, ferner mit dem Schritt zum Steuern der Alarmierung durch den beabsichtigten Empfänger.

46. Verfahren nach Anspruch 44 oder 45, wobei das Ausmaß der Steuerung durch den Sender definiert wird.

47. Verfahren nach irgendeinem der Ansprüche 30 - 46, ferner mit dem Schritt zum Bereitstellung eines Zugriffs auf einen beabsichtigten Empfänger einer Nachricht, unter Zugriffsbedingungen, die durch den Sender der Nachricht definiert sind.

48. Verfahren nach irgendeinem der Ansprüche 30 - 47, ferner mit dem Schritt zum Senden und Empfangen von Nachrichten, einschließlich von Sprachnachrichten, Multimedianachrichten, Kurznachrichten, Email-Nachrichten und Videonachrichten.

49. Verfahren nach irgendeinem der Ansprüche 30 - 48, ferner mit dem Schritt zum Bereitstellen von Alarmierungen in Nachrichtenform, einschließlich von Sprachnachrichten, Multimedianachrichten, Kurznachrichten, Email-Nachrichten und Videonachrichten.

50. Verfahren nach irgendeinem der Ansprüche 30 - 49, ferner mit dem Schritt zum Bereitstellen der Alarmierung mit der Gestalt einer interaktiven Form, zum Verarbeiten und Anzeigen durch eine graphische Nutzerschnittstelle, wobei die Form eine Information zumindest einer Nachricht für den beabsichtigten Empfänger umfasst.

## Revendications

1. Système de messagerie multimédia (201) sur un réseau de communication (202, 206, 207), conçu pour envoyer et recevoir des messages entre au moins un expéditeur (208) et au moins un destinataire désigné (209), ledit système comprenant :
- au moins une fonction de stockage (201 a, 201 b, 201 c), conçue pour stocker au moins un message, dans lequel la fonction de stockage (201 a, 201 b, 201 c) ou chacune d'entre elles est attribuée à l'expéditeur (208) d'un message ;
- un agencement de commande (501), conçu pour commander le stockage d'un message et pour contrôler l'accès à un message mémorisé ;
- un agencement d'accès (508), conçu pour donner accès à un message mémorisé ; et
- un agencement d'alerte (504), conçu pour fournir à un destinataire désigné (209) une alerte concernant le stockage d'un message ;
**caractérisé en ce que** ledit agencement de commande (501) est conçu pour traiter un message mémorisé sous le contrôle dudit expéditeur (208) dudit message auprès achèvement de la mémorisation de celui-ci ou achèvement d'un appel.

2. Système selon la revendication 1, dans lequel ledit traitement comprend au moins l'une des opérations consistant à stocker, consulter, lire, éditer et supprimer un message mémorisé, sous le contrôle dudit expéditeur (208).

3. Système selon la revendication 1 ou 2, dans lequel ledit agencement de commande (501) est conçu pour sélectionner une fonction de stockage (201 a, 201 b, 201 c) par ledit expéditeur (208) afin d'y stocker le message.

4. Système selon l'une quelconque des revendications précédentes, dans lequel ledit agencement d'alerte (504) est conçu pour commander ladite alerte par ledit expéditeur (208) d'un message.

5. Système selon la revendication 4, dans lequel ledit agencement d'alerte (504) comprend un moyen conçu pour manipuler une alerte, ladite manipulation comprenant au moins l'une des opérations consistant à lire, éditer et supprimer une alerte, sous le contrôle dudit expéditeur (208).

6. Système selon l'une quelconque des revendications précédentes, dans lequel ledit agencement de commande (501) est conçu pour inclure des informations supplémentaires avec un message mémorisé.

7. Système selon l'une quelconque des revendications précédentes, dans lequel ledit agencement d'alerte (504) est conçu pour inclure des informations supplémentaire avec une alerte.

8. Système selon la revendication 6 ou 7, dans lequel lesdites informations supplémentaires comprennent un élément dans le groupe comprenant : un identificateur de message, au moins une clef d'identification destinée à identifier au moins un destinataire désigné, un numéro de téléphone, une URL, un identificateur de message, un objet, un numéro d'identification personnelle dans un but de vérification et d'autorisation d'accès, l'urgence du message, la validité ou la date d'expiration du message, le type d'alerte, comprenant une tentative d'appel et un message multimédia, le nombre d'alertes, la localisation de la fonction de stockage du message, des dates-clefs, un état du message et des drapeaux qui doivent déclencher le transfert à l'expéditeur d'indications de changement d'état.

9. Système selon l'une quelconque des revendications précédentes, dans lequel ledit agencement de commande (501) comprend un moyen conçu pour notifier, à un expéditeur (208) d'un message mémorisé, des changements dans l'état dudit message.

10. Système selon l'une quelconque des revendications précédentes, dans lequel ledit agencement d'alerte (504) comprend un moyen conçu pour notifier, à un expéditeur (208) d'une alerte, des changements dans l'état de ladite alerte.

11. Système selon la revendication 9 ou 10, dans lequel ledit état comprend un élément dans le groupe composé de « expédié », « non lu », « lu », « expiré », « rappelé » et « réglé ».

12. Système selon l'une quelconque des revendications précédentes, dans lequel ledit agencement de commande (501) est accessible à l'aide d'une interface, y compris une interface utilisateur graphique, une interface à commande vocale, une interface à réponse vocale interactive et une interface à signalisation à deux fréquences.

13. Système selon l'une quelconque des revendications précédentes, dans lequel ledit agencement d'alerte (504) est accessible à l'aide d'une interface, y compris une interface utilisateur graphique, une interface de commande vocale, une interface de réponse vocale interactive et une interface à signalisation à deux fréquences.

14. Système selon l'une quelconque des revendications précédentes, dans lequel ledit agencement de commande (501) comprend un moyen de validation conçu pour vérifier et autoriser une tentative d'accès à un message mémorisé par un abonné au réseau de communication (202, 206, 207), afin de déterminer si ledit abonné est le destinataire désigné (209) dudit message avant de donner accès audit message par ledit abonné.

15. Système selon la revendication 14, dépendant des revendications 6, 7 ou 8, dans lequel ledit moyen de validation est conçu pour vérifier et autoriser ledit abonné à l'aide desdites informations supplémentaires.

16. Système selon l'une quelconque des revendications précédentes, dans lequel ledit agencement d'alerte (504) est conçu pour inclure dans ladite alerte des informations sur la manière d'accéder à un message mémorisé.

17. Système selon l'une quelconque des revendications précédentes, dans lequel ledit agencement de commande (501) est conçu pour stocker et consulter un message sous le contrôle du destinataire désigné (209) dudit message.

18. Système selon l'une quelconque des revendications précédentes, dans lequel ledit agencement d'alerte (504) est conçu pour que ladite alerte soit commandée par ledit destinataire désigné (209).

19. Système selon la revendication 17 ou 18, dans lequel l'étendue dudit contrôle est définie par ledit expéditeur (208).

20. Système selon l'une quelconque des revendications précédentes, dans lequel ledit agencement d'accès (508) est conçu pour donner accès à un destinataire désigné (209) d'un message dans des conditions d'accès définies par ledit expéditeur (208) dudit message.

21. Système selon l'une quelconque des revendications précédentes, dans lequel ledit agencement d'accès (508) est accessible à l'aide d'une interface, y compris une interface utilisateur graphique, une interface à commande vocale, une interface à réponse vocale interactive et une interface à signalisation à deux fréquences.

22. Système selon l'une quelconque des revendications précédentes, dans lequel ladite fonction de stockage (201 a, 201 b, 201 c) est distribuée sur ledit réseau de communication (202, 206, 207).

23. Système selon l'une quelconque des revendications précédentes, conçu pour envoyer et recevoir des messages, y compris des messages vocaux, des messages courts, des messages de courriel et des messages vidéo.

24. Système selon l'une quelconque des revendications précédentes, conçu pour fournir des alertes sous la forme de messages, y compris des messages vocaux, des messages courts, des messages de courriel et des messages vidéo.

25. Système selon l'une quelconque des revendications précédentes, dans lequel ladite alerte se présente comme un formulaire destiné à être traité et affiché par une interface utilisateur graphique, ledit formulaire comprenant des informations sur au moins un message adressé audit destinataire désigné (209).

26. Système selon la revendication 25, dans lequel ladite interface utilisateur graphique est conçue pour le transfert de données en duplex et dans lequel ledit formulaire est un formulaire interactif.

27. Système selon l'une quelconque des revendications précédentes, dans lequel ledit réseau de communication (202, 206, 207) comprend au moins un élément dans le groupe composé des réseaux de télécommunication et de données, y compris l'internet, un réseau téléphonique public commuté, un réseau numérique à intégration de services et un réseau mobile public terrestre.

28. Terminal destiné à être utilisé dans le système selon l'une quelconque des revendications précédentes, ledit terminal comprenant un moyen de commande conçu pour s'interfacer avec au moins l'un desdits agencements de commande (501), d'alerte (504) et d'accès (508).

29. Agencement de noeud de réseau destiné à être utilisé dans un réseau de communication (202, 206, 207) selon l'une quelconque des revendications 1 à 27, ledit agencement de noeud de réseau comprenant un agencement de commande (506) conçu pour commander le stockage d'un message et pour contrôler l'accès à un message mémorisé ; un agencement d'accès (508) conçu pour donner accès à un message mémorisé et un agencement d'alerte (504) conçu pour fournir à un destinataire désigné (209) une alerte concernant le stockage d'un message.

30. Procédé d'envoi et de réception de messages multimédias sur un réseau de communication (202, 206, 207), entre au moins un expéditeur (208) et au moins un destinataire désigné (209) d'un message, ledit procédé comprenant les étapes consistant à:
- attribuer audit expéditeur (208) d'un message, au moins une fonction de stockage (201 a, 201 b, 201 c) conçue pour stocker au moins un message ;
- stocker par ledit expéditeur (208) au moins un message dans la fonction de stockage (201 a, 201 b, 201 c) ou dans chacune d'entre elles ;
- informer au moins un destinataire désigné (209) sous la forme d'une alerte concernant le stockage d'un message ; et
- donner accès à un message mémorisé ;
**caractérisé en ce qu'**un message mémorisé peut être traité sous le contrôle dudit expéditeur (208) dudit message après achèvement de la mémorisation de celui-ci ou achèvement d'un appel.

31. Procédé selon la revendication 30, dans lequel ledit traitement comprend au moins l'une des opérations consistant à stocker, consulter, lire, éditer et supprimer un message mémorisé, sous le contrôle dudit expéditeur (208).

32. Procédé selon la revendication 30 ou 31, dans lequel ledit expéditeur (208) sélectionne une fonction de stockage (201 a, 201 b, 201 c) afin d'y stocker un message.

33. Procédé selon l'une quelconque des revendications 30 à 32, comprenant en outre l'étape consistant à contrôler ladite alerte par ledit expéditeur (208) d'un message.

34. Procédé selon la revendication 33, comprenant en outre l'étape consistant à manipuler une alerte, ladite manipulation comprenant au moins l'une des opérations consistant à lire, éditer et supprimer ladite alerte, sous le contrôle dudit expéditeur (208).

35. Procédé selon l'une quelconque des revendications 30 à 34, comprenant en outre l'étape consistant à inclure des informations supplémentaires avec un message mémorisé.

36. Procédé selon l'une quelconque des revendications 30 à 35, comprenant en outre l'étape consistant à inclure des informations supplémentaires avec une alerte.

37. Procédé selon la revendication 35 ou 36, dans lequel lesdites informations supplémentaires comprennent un élément dans le groupe comprenant : un identificateur de message, au moins une clef d'identification destinée à identifier au moins un destinataire désigné, un numéro de téléphone, une URL, un identificateur de message, un objet, un numéro d'identification personnelle dans un but de vérification et d'autorisation d'accès, l'urgence du message, la validité ou la date d'expiration du message, le type d'alerte, comprenant une tentative d'appel et un message multimédia, le nombre d'alertes, la localisation de la fonction de stockage du message, des dates-clefs, un état du message et des drapeaux qui doivent déclencher le transfert à l'expéditeur (208) de notifications de changement d'état.

38. Procédé selon l'une quelconque des revendications 30 à 37, comprenant en outre l'étape consistant à notifier, à un expéditeur (208) d'un message mémorisé, des changements dans l'état dudit message.

39. Procédé selon l'une quelconque des revendications 30 à 38, comprenant en outre l'étape consistant à notifier, à un expéditeur (208) d'une alerte, des changements dans un état de ladite alerte.

40. Procédé selon la revendication 38 ou 39, dans lequel ledit état comprend un élément dans le groupe composé de « expédié », « non lu », « lu », « expiré », « rappelé » et « réglé ».

41. Procédé selon l'une quelconque des revendications 30 à 40, comprenant en outre l'étape consistant à valider un abonné au réseau de communication (202, 206, 207) qui tente d'accéder à un message mémorisé, afin de déterminer si ledit abonné est le destinataire désigné (209) dudit message avant de donner accès audit message par ledit abonné, ladite validation comprenant la vérification et l'autorisation dudit abonné.

42. Procédé selon la revendication 41, dépendant des revendications 35, 36 ou 37, dans lequel ladite validation dudit abonné est effectuée à l'aide desdites informations supplémentaires.

43. Procédé selon l'une quelconque des revendications 30 à 42, comprenant en outre l'étape consistant à inclure dans ladite alerte des informations sur la manière d'accéder à un message mémorisé.

44. Procédé selon l'une quelconque des revendications 30 à 43, comprenant en outre l'étape consistant à stocker et consulter un message sous le contrôle du destinataire désigné dudit message.

45. Procédé selon l'une quelconque des revendications 30 à 44, comprenant en outre l'étape consistant à contrôler ladite alerte par ledit destinataire désigné.

46. Procédé selon la revendication 44 ou 45, dans lequel l'étendue dudit contrôle est définie par ledit expéditeur.

47. Procédé selon l'une quelconque des revendications 30 à 46, comprenant en outre l'étape consistant à donner accès à un destinataire désigné d'un message dans des conditions d'accès définies par ledit expéditeur dudit message.

48. Procédé selon l'une quelconque des revendications 30 à 47, comprenant en outre l'étape consistant à envoyer et recevoir des messages, y compris des messages vocaux, des messages multimédia, des messages courts, des messages de courriel et des messages vidéo.

49. Procédé selon l'une quelconque des revendications 30 à 48, comprenant en outre l'étape consistant à fournir des alertes sous la forme de messages, y compris des messages vocaux, des messages multimédia, des messages courts, des messages de courriel et des messages vidéo.

50. Procédé selon l'une quelconque des revendications 30 à 49, comprenant en outre l'étape consistant à fournir ladite alerte sous l'aspect d'un formulaire interactif destiné à être traité et affiché par une interface utilisateur graphique, ledit formulaire comprenant des informations sur au moins un message adressé audit destinataire désigné.
